# FASCICULE DE BREVET EUROPEEN

(11) **EP 1 064 195 B1**
(45) Date de publication et mention de la délivrance du brevet: **07.05.2003**
(21) Numéro de dépôt: 99936058.9
(22) Date de dépôt: 24.02.1999
(51) Int. Cl.: B64D 47/02, F21V 9/00

(54) **MOYEN D'ECLAIRAGE POUR AERONEF COMPATIBLE AVEC UN SYSTEME DE VISION NOCTURNE**
MIT EINEM NACHTSICHTSYSTEM KOMPATIBLE FLUGZEUGBELEUCHTUNGSVORRICHTUNG
AIRCRAFT LIGHTING MEANS COMPATIBLE WITH A NIGHT VISION IMAGING SYSTEM

(30) Priorité: 24.02.1998 FR 9802310
(43) Date de publication de la demande: 03.01.2001
(73) Titulaire: Wilco International S.A.R.L., 83500 La Seyne Sur Mer (FR)
(72) Inventeur: WILHELM, Jean-Marc, Bernard, F-83140 Six Fours (FR); PRANDI, Robert, F-83500 La Seyne sur Mer (FR)
(74) Mandataire: Marchand, André
(86) Numéro de dépôt international: FR9900423
(87) Numéro de publication internationale: WO99043547

(56) Documents cités:
- EP-A- 0 540 140
- EP-A- 0 808 082
- US-A- 4 580 196
- US-A- 5 083 246
- US-A- 5 655 830
- US-A- 5 685 637
- EDWIN BERNARD: "High Performace Modern Avionic Instruments-The LED Flat Panel Display Solution" SAE TECHNICAL PAPER SERIES,1 octobre 1990, pages 1-9, XP002082696

## Description

La présente invention concerne un moyen d'éclairage compatible avec un système de vision nocturne à intensification de lumière.

La présente invention concerne notamment mais non exclusivement les systèmes d'éclairage, les moyens d'éclairage et les objets éclairants ou éclairés présents dans ou sur les aéronefs, par exemple les éclairages des tableaux de bord, les diffuseurs de lumière pour l'éclairage ambiant des cabines de pilotage, les voyants lumineux, les systèmes d'affichage de caractères lumineux, les feux de position, les feux d'atterrissage, les feux de formation en vol, les feux anticollision...

Le document US-A-4 580 196 divulgue un procédé selon le préambule de la revendication 16 et de la revendication 31, utilisant des diodes électroluminescentes à lumière verte.

Le document EP-A-0 540 140 décrit un système d'éclairage d'une affichage électro-optique ayant des diodes électroluminescents émettant une lumière blanche à faible énergie dans la bande de longueurs d'ondes du rouge

Le document EP-A-0 808 082 divulgue un système d'éclairage selon le préambule de la revendication 44 (moyens d'éclairage infrarouge 32, moyens d'éclairage visible (vert) 31, moyens interrupteurs 35).

Le document WO 97/50132 décrit une diode électroluminescent en soi-même.

Le document US-A-5 083 246 décrit un système d'éclairage comprenant des diodes électroluminescents à lumière verte pour l'éclairage dans le visible.

Ces dernières années, on a vu apparaître sur le marché des équipements aéronautiques des systèmes de vision nocturne permettant de faciliter le pilotage de nuit en palliant l'absence de sensibilité de l'oeil humain à l'infrarouge, c'est-à-dire aux longueurs d'onde supérieures à 770 nm environ. Ces systèmes, généralement désignés "NVIS" par abréviation de l'appellation anglo-saxonne "Night Vision Imaging System" présentent une grande sensibilité aux rayonnements infrarouges jusqu'à des longueurs d'onde de 900 nm environ. Ils se présentent habituellement sous forme de lunettes comprenant deux intensificateurs de lumière, chaque intensificateur étant comparable à une caméra vidéo miniature délivrant une image électronique du milieu extérieur. Même quand règne la plus grande obscurité, un système de vision nocturne délivre une image monochrome du milieu extérieur claire et contrastée.

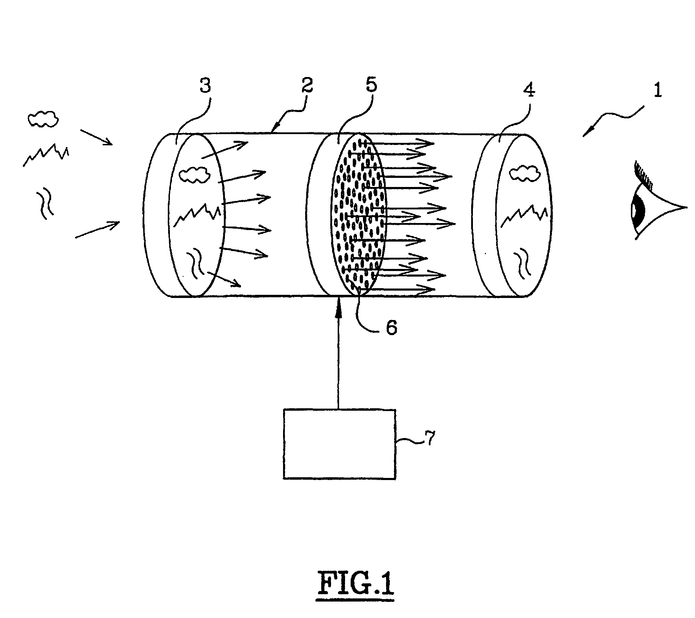

Très schématiquement, on rappelle en relation avec la figure 1 qu'un intensificateur de lumière comprend un tube sous vide 2 comportant à sa première extrémité une photocathode 3 qui transforme les photons de l'image reçue sur sa face externe en un faisceau d'électrons dont la densité et la répartition sont fonction de l'image. Le faisceau d'électrons est envoyé sur un écran au phosphore 4 agencé à l'autre extrémité du tube 2 par l'intermédiaire d'une plaque amplificatrice 5. La plaque amplificatrice 5 comprend une multitude de micro-canaux 6 recouverts d'un revêtement à forte émission secondaire, dont le rôle est de démultiplier les électrons émis par la photocathode 3. La plaque amplificatrice est pilotée par un circuit 7 dit de "contrôle automatique de gain". Ce circuit 7 est un circuit à contre réaction qui optimise le gain, c'est-à-dire le niveau d'intensification, en fonction de la luminosité ambiante, et offre un résultat comparable à la fermeture ou l'ouverture d'un diaphragme. Sans ce circuit de protection, une augmentation de l'énergie lumineuse ambiante dans la bande de sensibilité de la photocathode provoquerait une augmentation immédiate du flot d'électrons et dégraderait la sensibilité et la résolution. Le circuit 7 provoque l'extinction totale du tube intensificateur quant une variation brutale de l'énergie radiante se produit.

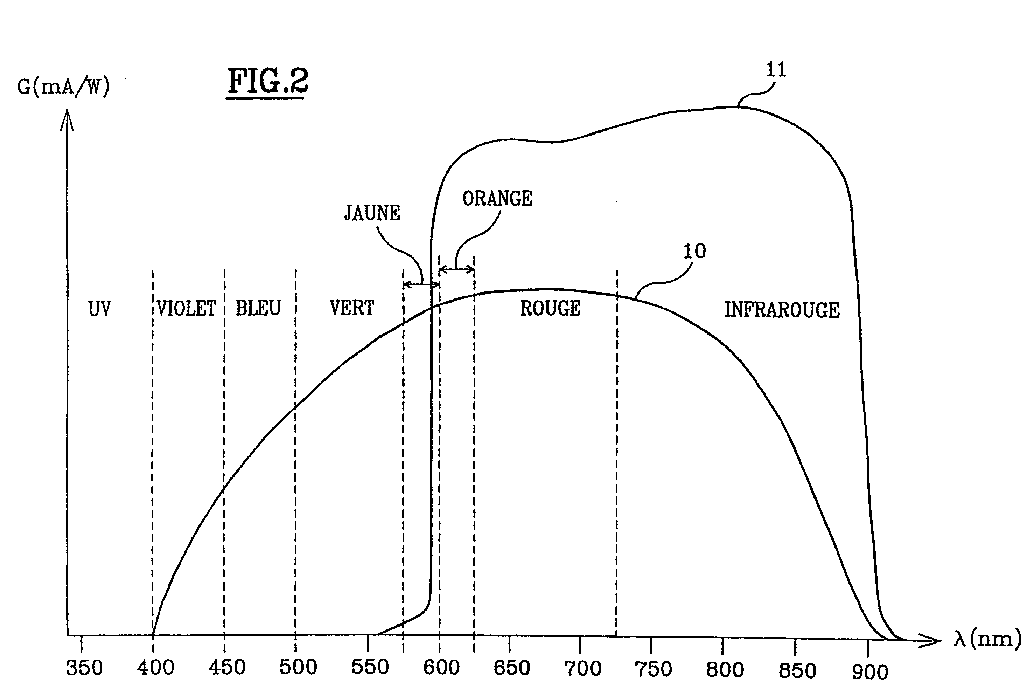

Les intensificateurs de lumière ayant fait l'objet de divers perfectionnements depuis leur apparition, on trouve à l'heure actuelle sur le marché deux types d'intensificateurs de technologies concurrentes, dits "GEN2" (de "deuxième génération") et "GEN3" (de "troisième génération"). Les tubes GEN3 comportent une photocathode à l'arséniure de gallium et se distinguent par une très grande sensibilité à l'énergie radiante, de l'ordre de 1200 à 1800 µA/lm selon les modèles, et une bande passante assez sélective allant de 600 nm (limite entre le jaune et le rouge) à 900 nm. Les tubes GEN2 comportent une photocathode trialcaline offrant une sensibilité plus réduite, de l'ordre de 500 à 800 µA/lm, et une bande passante plus étendue allant de 400 à 900 nm et couvrant le spectre du visible. Pour fixer les idées, les courbes 10 et 11 de la figure 2 représentent respectivement le gain G des tubes GEN2 et GEN3 en fonction de la longueur d'onde λ. Malgré leur plus faible sensibilité, les photocathodes trialcaline offrent un meilleur rapport signal/bruit que les photocathodes à l'arséniure de gallium, de sorte que l'on trouve des systèmes de vision nocturne de type GEN2 égalant les systèmes de vision nocturne de type GEN3 en termes de résolution et de qualité d'image.

En pratique, un objectif essentiel devant être atteint est que les pilotes d'aéronefs puissent utiliser des lunettes de vision nocturne tout en conservant la possibilité de consulter les instruments de bord. Cet objectif, essentiellement ergonomique, implique que deux conditions soient satisfaites :
- d'une part, que les tubes intensificateurs ne masquent pas entièrement le champ visuel du pilote,
- d'autre part, que les éclairages de l'aéronef ne perturbent pas les tubes intensificateurs en donnant naissance à des halos parasites ou à des images fantômes dues à la réflexion des objets éclairés sur les vitres du cockpit.

En ce qui concerne la première condition, les différentes études ergonomiques conduites ces dernières années ont donné naissance à deux types de lunettes de vision nocturne, qualifiés de type I et de type II par la norme MIL-L-85762A à laquelle on se réfère ici par simple commodité, la classification susmentionnée étant fréquemment utilisée par l'homme de l'art. Les lunettes de type I, destinées au pilotage d'hélicoptères, sont fixées sur les casques de pilotage de manière que les deux écrans au phosphore se retrouvent devant les yeux du pilote, à une distance minimum lui permettant de voir les instruments de bord en baissant le regard. Les lunettes de type II, destinées aux aéronefs à voilure fixe, fonctionnent à la manière d'un afficheur tête haute, l'image délivrée par les écrans au phosphore étant projetée devant les yeux du pilote par des lentilles transparentes permettant de voir simultanément, en juxtaposition, les instruments de bord.

Par ailleurs, la suppression des risques d'interférence entre les sources de lumière des aéronefs et les lunettes de vision nocturne est obtenue en procédant à une adaptation ("retrofit") du système d'éclairage des aéronefs consistant essentiellement à caler toutes les sources de lumière sur une couleur monochromatique aussi éloignée que possible de la bande des longueurs d'onde du rouge. En effet, comme on le voit en figure 2, les lunettes de vision nocturne du type GEN2 ou GEN3 n'ont pas une bande passante limitée à l'infrarouge et présentent une sensibilité élevée aux longueurs d'onde du rouge, dans une bande couvrant sensiblement les 600 à 770 nm (on considère dans un souci de simplicité que la bande du rouge comprend également les longueurs d'onde de l'orange et du jaune, étant donné qu'il n'existe pas, en pratique, de lumière parfaitement monochromatique, toute source de lumière orange ou jaune comprenant inévitablement une composante rouge). Dans l'état de l'art, la bande du rouge est ainsi considérée comme une bande critique dans laquelle toute émission de lumière est susceptible de perturber fortement des lunettes de vision nocturne en provoquant le déclenchement du circuit de contrôle automatique de gain (fermeture du "diaphragme électronique"). Notamment, les lumières blanches à incandescence sont prohibées en ce qu'elles contiennent une forte proportion de rouge et d'infrarouge.

Ainsi, en pratique, l'adaptation d'un système d'éclairage d'aéronef consiste à encapsuler les lampes blanches à incandescence au moyen de filtres atténuateurs passe-bas et à remplacer d'autres lampes blanches à incandescence par des diodes ou des plaques électroluminescentes diffusant une lumière de couleur verte à bande étroite, appelée "vert aviation", centrée sur les 555 nm. Généralement, les lampes blanches à incandescence devant être encapsulées sont les lampes des voyants d'avertissement et d'alarme de couleur jaune, orange, rouge. Les lampes blanches à incandescence devant être remplacées par des diodes électroluminescentes vertes sont par exemple les lampes des voyants verts, les lampes servant à l'éclairage du tableau de bord, ainsi que les lampes de rétro-éclairage permettant de faire apparaître par transparence des caractères lumineux sur une planche de bord. Enfin, les lampes servant à l'éclairage ambiant sont généralement remplacées par des plaques électroluminescentes vertes, auxquelles on associe un diffuseur mécanique à volets orientables.

Une telle adaptation des moyens d'éclairage d'un aéronef présente divers inconvénients. D'une part, on obtient une lumière ambiante verdâtre qui atténue très sensiblement la lisibilité des instruments de bord et délave les couleurs. Ainsi, par exemple, les peintures blanches ou jaunes, oranges et rouges des boîtiers des instruments de bord (servant par exemple à délimiter des régimes de fonctionnement d'un moteur) apparaissent respectivement vertes, marron clair et marron foncé. Également, l'éclairage vert rend la lecture des cartes de navigation difficile et fatigante. En outre, les voyants d'alarme rouges et ceux comportant une composante rouge, comme les voyants jaunes et orange, présentent une luminosité médiocre et une coloration peu satisfaisante en raison de la forte absorption des filtres atténuateurs. Enfin, encore un autre inconvénient d'une telle adaptation est le coût élevé des filtres atténuateurs.

Dans l'art antérieur, ces inconvénients sont considérés comme inhérents au fait de vouloir concilier la vision infrarouge du milieu extérieur et la vision naturelle des instruments de bord. On considère en outre que le "vert aviation" à 555 nm est la couleur idéale pour concilier les diverses exigences. D'une part, ce vert est suffisamment éloigné du rouge pour ne pas perturber les systèmes de vision nocturnes. D'autre part, les diodes électroluminescentes vertes (ainsi que les plaques électroluminescentes vertes) sont "propres" et n'émettent pratiquement pas d'énergie dans la bande du rouge, c'est-à-dire au delà des 600 nm. Enfin, le vert est la couleur où la sensibilité de l'oeil humain est maximale, de sorte qu'il est préféré au bleu. Plus précisément, outre la faible sensibilité dans le bleu, l'oeil humain a une forte rémanence dans le bleu, ce qui est considéré comme incompatible avec la vision nocturne.

Malgré ces diverses considérations ayant conduit l'homme de l'art aux choix technologiques que l'on vient de décrire, la présente invention se fonde sur une constatation surprenante dont la portée va à l'encontre des préjugés et normes en vigueur. Selon cette constatation, une lumière blanche émise par une source de lumière fonctionnant par électroluminescence ne perturbe aucunement les systèmes de vision nocturne connus actuellement, qu'ils soient du type GEN2 ou du type GEN3. Plus particulièrement, les diodes électroluminescentes blanches ainsi que les plaques électroluminescentes blanches disponibles sur le marché des composants lumineux, destinées normalement aux applications grand public, émettent un rayonnement qui ne déclenche pas le circuit de contrôle automatique de gain d'un système de vision nocturne et ne nécessite même pas d'être filtré dans la bande critique du rouge pour offrir ces avantages. Un tel rayonnement non perturbateur comporte pourtant une composante rouge, mais de faible énergie. On verra plus loin quelles sont les explications que l'on peut essayer de donner à cette compatibilité très avantageuse des sources électroluminescentes blanches avec les systèmes intensificateurs de lumière. En tout état de cause, la découverte faite par la demanderesse a une conséquence pratique considérable pour le domaine de l'aéronautique, qui est de pouvoir offrir aux pilotes d'aéronefs un confort visuel comparable à celui de la lumière du jour tout en permettant la visualisation infrarouge du milieu extérieur au moyen d'un système intensificateur de lumière, sans risque d'un déclenchement intempestif du circuit de contrôle automatique de gain.

Aussi, la présente invention propose une utilisation selon la revendication 1, un procéde selon l'une des revendications 16, 31 et 34, un moyen d'éclairage selon l'une des revendications 37 et 41, et un système d'éclairage selon la revendication 44.

Ces objets, caractéristiques et avantages de la présente invention seront exposés plus en détail dans la description suivante de l'invention et d'exemples d'applications, faite à titre non limitatif en relation avec les figures jointes parmi lesquelles :
- la figure 1 précédemment décrite représente de façon schématique un tube intensificateur de lumière,
- la figure 2 précédemment décrite représente les courbes de gain de deux tubes intensificateurs de lumière classiques,
- la figure 3 représente les courbes de l'intensité relative en fonction de la longueur d'onde de la lumière émise par une diode électroluminescente verte et une diode électroluminescente blanche,
- la figure 4 illustre une application selon l'invention d'une diode électroluminescente blanche,
- les figures 5A et 5B illustrent respectivement par une vue de dessus et une vue en coupe une autre application selon l'invention d'une diode électroluminescente blanche,
- la figure 6 représente une lampe de micro et illustre encore une autre application selon l'invention d'une diode électroluminescente blanche,
- la figure 7 représente un élément de la lampe de la figure 6,
- la figure 8 représente un diagramme de chrominance de l'oeil humain sur lequel sont schématisés les dominantes spectrales d'une source électroluminescente blanche mise en oeuvre selon l'invention, et
- la figure 9 représente les courbes d'intensité absolue en fonction de la longueur d'onde de la lumière émise par une diode électroluminescente verte et par une diode électroluminescente blanche ayant des puissances lumineuses comparables.

La présente invention se fonde sur la constatation que la lumière émise par les sources électroluminescentes dites "blanches" disponibles sur le marché ne perturbe aucunement les systèmes de visions nocturne connus actuellement, qu'ils soient du type GEN2 ou du type GEN3.

Par sources électroluminescentes blanches, on désigne les diodes électroluminescentes blanches ainsi que les plaques électroluminescentes blanches disponibles sur le marché des composants lumineux. Ces composants sont destinés normalement aux applications grand public, par exemple le repérage des issues de secours, la fabrication de panneaux publicitaires lumineux,... Ils sont utilisés en raison de leur faible consommation de courant et leur durée de vie importante.

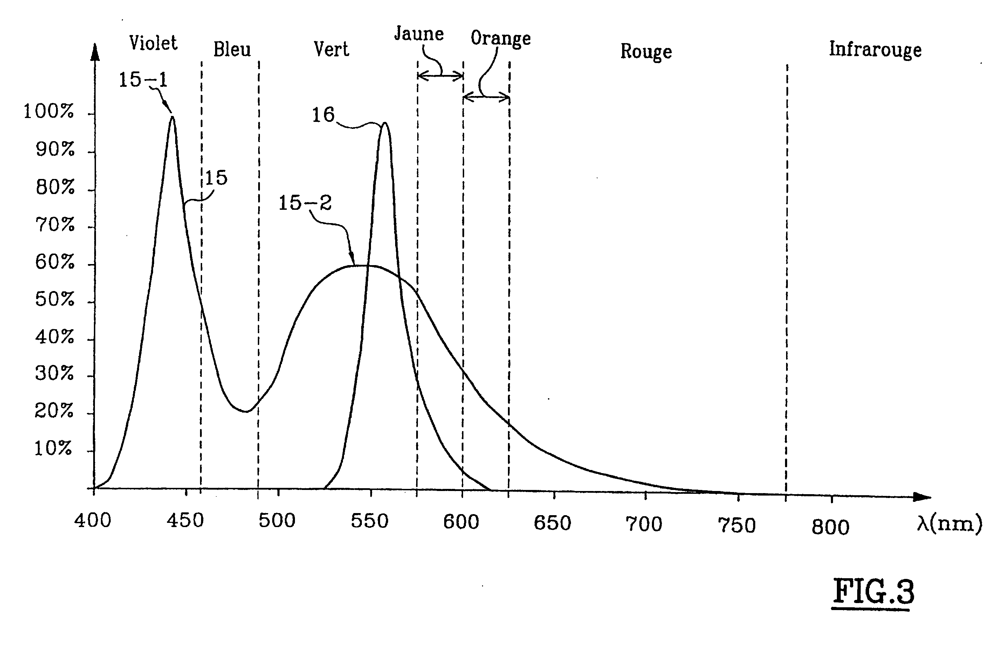

La figure 3 représente la courbe 15 de l'intensité relative en fonction de la longueur d'onde de la lumière émise par une diode électroluminescente blanche de référence T1 WHITE LED L3-W31N commercialisée par la société suisse SLOAN. Cette diode basse tension, fonctionnant sous 3,6 V/20 mA, présente l'avantage d'un rendement élevé de 5 lm/W qui la rend compatible avec l'éclairage des tableaux de bord. A côté de la courbe 15, on a également représenté la courbe 16 de l'intensité relative d'une diode électroluminescente verte utilisée de façon classique dans le domaine aéronautique. La diode blanche a été testée par la demanderesse avec un système intensificateur de type GEN3 commercialisé sous la référence OB56 par la société française SFIM ainsi qu'avec un système intensificateur GEN2 commercialisé sous la référence SUPERGEN par la société PHILIPS. De façon surprenante, les essais en éclairage indirect (lumière ambiante) ont montré que la diode électroluminescente blanche émet un rayonnement qui ne crée pas de halo ou d'image fantôme dans le système de vision nocturne, et ne déclenche pas le circuit de contrôle automatique de gain. Ces résultats très avantageux ont été obtenus sans aucun filtrage de la lumière blanche ni filtrage des systèmes de vision nocturne. De façon plus surprenante encore, des essais en éclairage direct (lunettes de vision nocturne orientées directement vers la source de lumière) ont montré que le système de contrôle automatique de gain d'un système de vision nocturne est plus sensible aux diodes électroluminescentes vertes utilisées dans l'art antérieur (courbe 16) qu'à la diode électroluminescente blanche découverte par la demanderesse (courbe 15).

Ce résultat surprenant à plusieurs titres. D'une part, comme on le voit sur la figure 3, le spectre de longueurs d'onde de la diode électroluminescente blanche s'étend jusqu'à la bande du rouge. En outre, à intensité identique de lumière (puissance émise par unité d'angle solide), la diode blanche délivre un éclairement (puissance reçue par unité de surface) significativement supérieur à la diode verte classique (au moins deux à trois fois supérieur) de sorte que l'on pouvait s'attendre à une incompatibilité encore plus marquée de la diode blanche avec les systèmes intensificateurs de lumière.

Sous toutes réserves, une explication avancée par la demanderesse est que l'énergie émise par la diode électroluminescente blanche dans la bande critique du rouge est très faible et ne représente que 5 à 7 % de l'énergie lumineuse totale (aire de la courbe 15), laquelle est fortement centrée sur la bande violet/bleu et sur la bande verte, où l'on trouve deux pics d'intensité 15-1, 15-2. Il semble par ailleurs que cette répartition globale de l'énergie entre la bande du violet/bleu et la bande du vert contribue au résultat obtenu, l'énergie moyenne se trouvant finalement plus éloignée du rouge que celle émise par une diode électroluminescente verte.

Par ailleurs, la demanderesse a tenu à s'assurer de la stabilité (ou "répétabilité") du résultat obtenu et a testé d'autres sources électroluminescentes de lumière blanche, réalisées par d'autres fabricants, qui ont également donné d'excellents résultats. En particulier, la demanderesse a testé des diodes électroluminescentes blanches commercialisées sous la référence LED WHITE PLANE par la société MICHIA, ainsi que des plaques électroluminescentes blanches grand public commercialisées sous la référence COLOR WHITE par la société anglaise DANIELSON, laquelle propose par ailleurs dans son catalogue des plaques électroluminescentes vertes pour l'aéronautique, sous la référence AVIATION GREEN.

Toutefois, il appartiendra à l'homme de l'art, par de simples essais pratiques, de vérifier que telle ou telle diode électroluminescente blanche disponible dans le commerce offre les résultats de l'invention. En principe, la demanderesse considère que ce résultat devrait être atteint dans la mesure où l'énergie radiante émise dans la bande critique des longueurs d'onde du rouge est faible. L'influence de la répartition de l'énergie entre les bandes du violet/bleu et du vert/jaune fait l'objet d'explications physiques indicatives ci-après.

Sur la figure 2, les courbes 10 et 11 laissent apparaître certaines caractéristiques des phénomènes de réception dans les systèmes de vision nocturne à intensification de lumière de type GEN2 et GEN3 respectivement.

La courbe 10 montre qu'un système de vision nocturne du type GEN2 présente une sensibilité maximale dans la bande du rouge.

La sensibilité décroît brutalement dans l'infrarouge à une longueur d'onde inférieure à 900 nm, mais par contre elle décroît lentement dans le visible jusqu'à la bande du violet.

De telles courbes dissymétriques avec un seuil brusque à grande longueur d'onde et une longue traine vers les courtes longueurs d'onde sont caractéristiques des phénomènes de réception dans les photocathodes. Le seuil de longueur d'onde correspond à l'énergie requise d'un photon pour libérer un électron de l'élément sensible de la photocathode. La lente décroissance de la sensibilité aux courtes longueurs d'ondes correspond à la lente diminution de la probabilité de libérer un électron lorsque le photon a une énergie plus élevée par rapport à cette énergie requise.

La courbe de sensibilité des photocathodes à l'Arseniure de Gallium des systèmes de vision nocturne de type GEN3 présentent la même allure dissymétrique, avec une sensibilité maximale dans l'infrarouge, à une longueur d'onde d'environ 900 nm et un niveau moyen de sensibilité plus élevé.

On note toutefois que sur la courbe 11 de la figure 2, la lente décroissance de la sensibilité qui devrait apparaître vers les courtes longueurs d'ondes du visible est supprimée à cause d'un filtrage des longueurs d'ondes visibles qui est associée habituellement aux systèmes de vision nocturne de type GEN3.

En effet, le filtrage des systèmes de vision nocturne type GEN3 coupe la transmission des longueurs d'ondes supérieures à 600 nm, allant du jaune aux ultraviolets pour ne pas être parasité par les éclairages ambiants et préserve la transmission des longueurs d'ondes infrarouge et rouge, nécessaires à la vision nocturne.

A l'inverse de la dissymétrie des spectres de réception, les sources électroluminescentes à semi-conducteurs présentent, en émission, des raies spectrales assez étroites avec un seuil brusque vers les courtes longueurs d'ondes et une décroissance plus progressive vers les grandes longueurs d'ondes.

On voit ainsi sur la figure 3 que le spectre 16 des diodes silicium "vert aviation" bien connues, présente un pic d'émissivité à une longueur d'onde de 555 nm, décroissant brutalement vers les courtes longueurs d'ondes du bleu et décroissant plus progressivement vers les grandes longueurs d'ondes de l'orange.

De façon surprenante, l'invention montre que lorsque les longueurs d'onde de la traîne d'émissivité des moyens d'éclairage coïncident avec les longueurs d'onde de la traîne de réceptivité d'un système de vision nocturne, il ne se produit pas d'éblouissement, ni de déclenchement intempestif du contrôle automatique de gain du système de vision nocturne.

En effet, dans cette bande de longueur d'onde commune, la faible intensité résiduelle de la source lumineuse combinée avec la faible sensibilité résiduelle du système de vision nocturne, n'atteint pas un seuil suffisant pour provoquer une saturation du système de vision nocturne.

Tout l'intérêt des sources électroluminescentes mises en oeuvre selon l'invention est de fournir une lumière blanche avec une émissivité excentrée vers la bande des longueurs d'ondes du violet/bleu au lieu de présenter une lumière monochromatique centrée sur la bande des longueurs d'onde du vert/jaune, comme dans l'état de la technique.

De façon plus surprenante encore, la lumière blanche produite par la source électroluminescente mise en oeuvre selon l'invention, présente un spectre à dominante bichromatique avec seulement un pic de chrominance violet/bleu et une large plage de chrominance allant du vert à l'orange, mais sans dominante dans la troisième couleur primaire, le rouge.

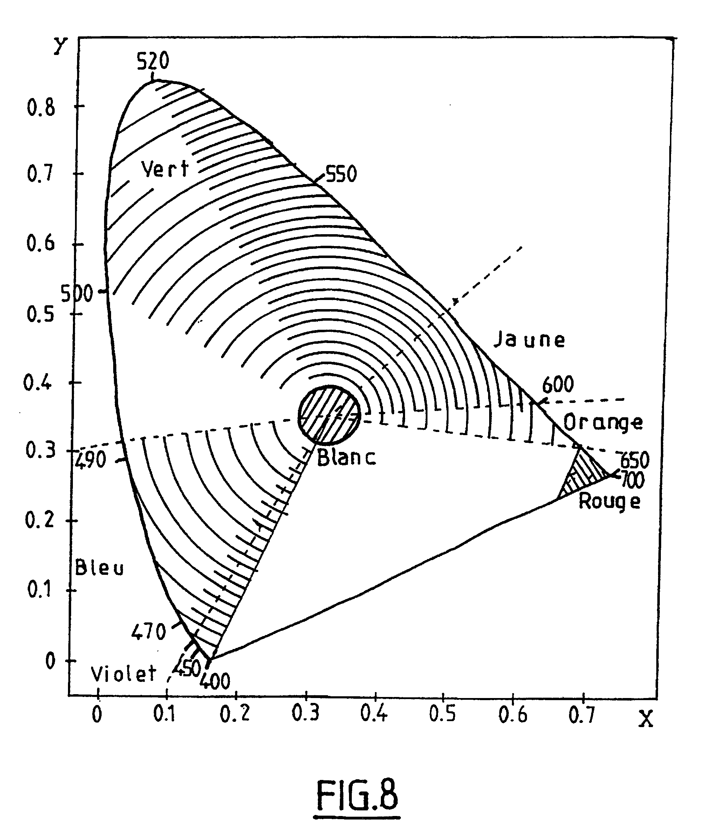

En effet, comme le montre le diagramme de chrominance de l'oeil humain de la figure 8, il suffit qu'une source lumineuse présente un fort pic d'émissivité de longueur d'onde d'environ 430 nm à 490 nm et une émissivité moyenne dans une bande de longueurs d'ondes s'étendant d'environ 520 à 600 nm pour que la pondération de la lumière corresponde à une lumière blanche pour l'oeil humain.

Il est à noter que la diode T1 WHITE LED et la plaque LED WHITE PLANE ci-dessus référencées, ont des paramètres colorimétriques (x=0,29 : y=0,30 et x=0,31 : y=0,32 respectivement) qui entrent précisément dans la plage du blanc.

En outre, on sait que l'oeil humain a une très forte sensibilité dans le rouge et une faible sensibilité dans le bleu, si bien qu'une lumière polychromatique est perçue comme étant blanche, lorsqu'elle contient environ 5% de composante rouge, 20% de composante verte et 75% de composante bleue, en proportion d'intensité lumineuse. La répartition spectrale, illustrée figure 3, de l'intensité lumineuse de la source électroluminescente montre que la lumière polychromatique correspond sensiblement à cette définition de la blancheur.

Contrairement aux préjugés du domaine de la vision nocturne, selon lesquels il faut éviter la lumière bleue qui désensibiliserait les bâtonnets de l'oeil ce qui inhiberait la vision nocturne et selon lesquels il faut éviter les diodes électroluminescentes blanches qui émettraient trop fortement dans le rouge et l'infrarouge, la source électroluminescente à spectre excentré vers le violet/bleu mise en oeuvre selon l'invention, présente une très bonne luminosité pour l'oeil humain et ne parasite pas les systèmes de vision nocturne.

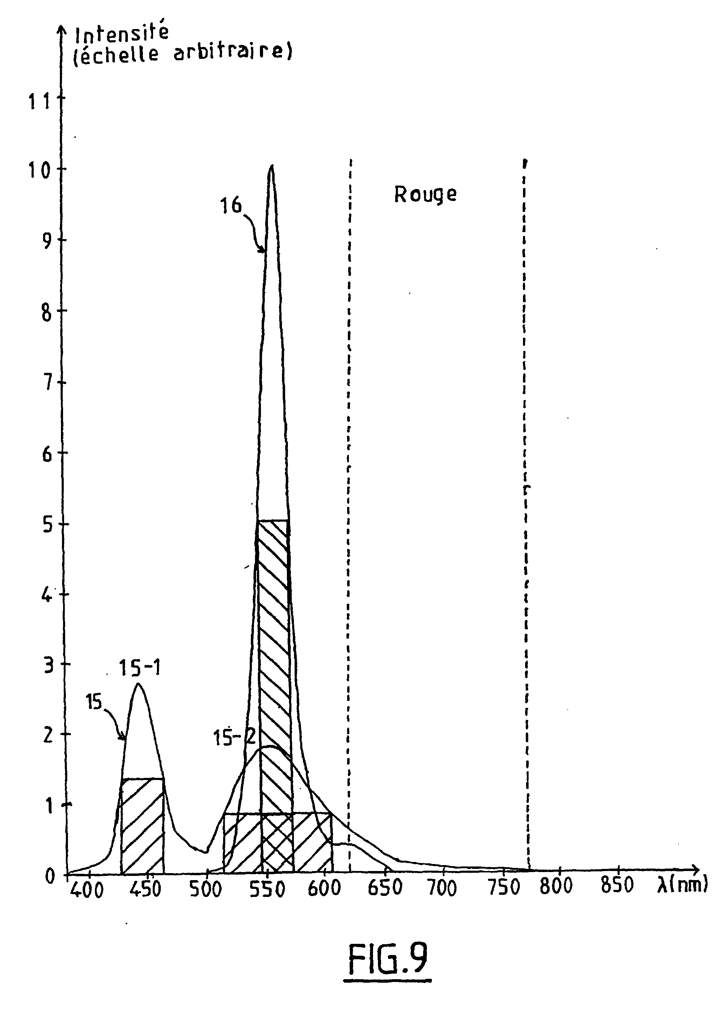

La figure 9 montre encore qu'à puissance lumineuse égale, la source électroluminescente blanche à forte énergie radiante dans le violet/bleu présente une énergie résiduelle dans le rouge comparable à celle des diodes électroluminescentes "vert-aviation" de l'état de la technique.

La particularité de l'invention est donc de mettre en oeuvre une source électroluminescente à forte ou très forte énergie radiante dans la bande de longueurs d'ondes du violet/bleu et à forte ou moyenne énergie radiante dans les bandes de longueurs d'ondes du vert/jaune et de l'orange avec une faible énergie résiduelle dans la bande de longueurs d'ondes du rouge.

De façon avantageuse, la source de lumière blanche mise en oeuvre selon l'invention fournit une très bonne luminosité pour l'oeil humain.

Un autre avantage de l'invention est d'éviter de perturber les systèmes de vision nocturne, même en éclairage direct.

L'absence de perturbation permet encore d'envisager d'utiliser sans filtrage les systèmes de vision nocturne de type GEN3 avec des sources électroluminescentes blanches selon l'invention.

En effet, la demanderesse a observé qu'après avoir escamoté les filtres "minus-blue" qui équipent habituellement tout système de vision nocturne à photocathode à l'Arséniure de Gallium, ces systèmes restent compatibles avec l'éclairage des sources électroluminescentes blanches, selon l'invention.

En pratique, la découverte selon l'invention a une conséquence d'une portée considérable, qui est de pouvoir offrir aux pilotes d'aéronefs un confort visuel comparable à celui de la lumière du jour tout en permettant la visualisation infrarouge du milieu extérieur.

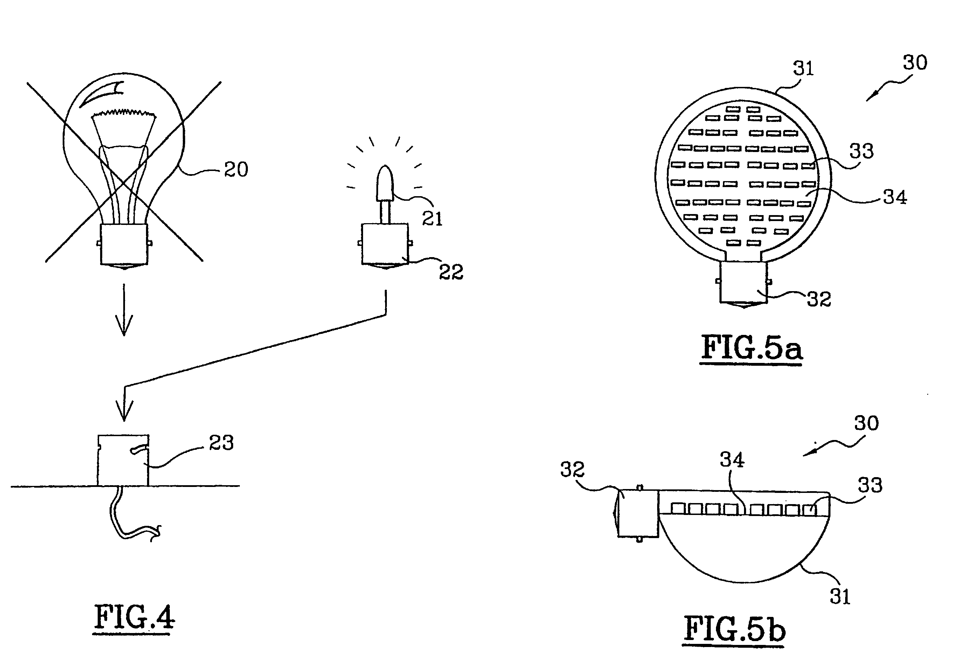

Ainsi, comme illustré en figure 4, on propose par exemple que chaque lampe à incandescence 20 d'un aéronef soit remplacée par une ou plusieurs diodes électroluminescentes blanches 21 montées sur un culot 22 vissant ou à baïonnette compatible avec la douille 23 de la lampe à incandescence 20. Ce changement de source de lumière implique une modification de la tension d'alimentation du système d'éclairage, qui doit être portée à 3,6 V/20 mA.

De façon générale, une diode électroluminescente blanche peut être utilisée pour l'éclairage ambiant, l'éclairage des instruments de bord, la réalisation de voyant lumineux, et le rétro-éclairage des panneaux d'affichage de caractères. Ces panneaux d'affichage, en général en Plexiglas®, sont peints en noir et comportent des zones transparentes dépourvues de peinture formant des caractères. La source électroluminescente de lumière blanche peut aussi fournir un éclairage guidé dans une planche translucide de tableau de bord. Également, plusieurs diodes électroluminescentes blanches peuvent être agencées en rampe pour l'éclairage d'un tableau de bord ou pour l'éclairage ambiant. Pour l'éclairage ambiant, on préférera toutefois une plaque électroluminescente blanche qui offre l'avantage d'une meilleure répartition de la lumière. Enfin, les voyants colorés sont réalisés de préférence sans adjonction de filtres atténuateurs, les diodes électroluminescentes étant simplement recouvertes par un capuchon en matière plastique colorée.

Par ailleurs, selon un aspect de l'invention, on propose de combiner plusieurs diodes électroluminescentes blanches pour réaliser des feux de position d'un aéronef, ou des feux de formation en vol, des feux d'atterrissage, etc.. A titre d'exemple, les figures 5A et 5B représentent par une vue de dessus et une vue en coupe un moyen d'éclairage 30 comprenant une coquille 31 en matériau composite solidaire d'un culot 32, dans laquelle est agencée une pluralité de diodes électroluminescentes 33 brasées sur un circuit imprimé 33. Les diodes 33 sont du type "CMS" ("Composant à Montage en Surface"). Leur nombre est choisi de manière que le moyen d'éclairage 30 délivre une intensité lumineuse répondant aux normes en vigueur. L'interconnexion des diodes 33 au moyen du circuit imprimé 34 est faite en série/parallèle, de manière que la tension et la consommation de l'ensemble soit compatible avec les normes en vigueur.

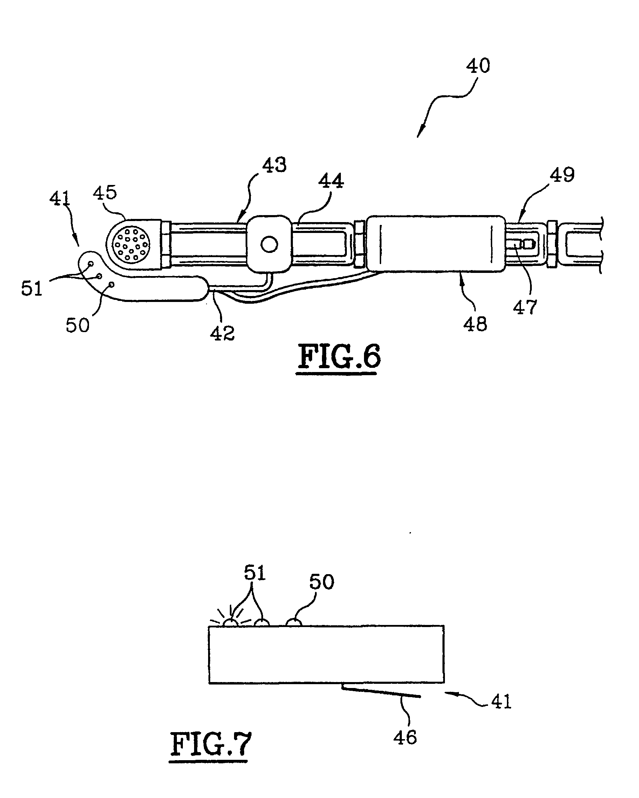

Enfin, la figure 6 illustre encore une autre application selon l'invention d'une diode électroluminescente blanche et représente une lampe de micro 40 du type décrit dans le brevet européen EP 808 082 au nom de la demanderesse. De façon classique, la lampe de micro 40 comprend un boîtier 41 d'éclairage dans le visible et l'infrarouge monté à l'extrémité d'une tige flexible 42, dont l'autre extrémité est fixée de façon coulissante sur la partie distale 43 d'un bras 44 de microphone 45. Le boîtier d'éclairage 41, vu de profil sur la figure 7, comprend un organe interrupteur 46 à faible effort orientable vers la bouche d'un pilote. La lampe de micro comprend également un interrupteur général à trois positions 47 solidaire d'un boîtier de commande 48 fixé à la partie proximale 49 du bras de microphone. L'interrupteur 47 permet de choisir entre une position d'éclairage dans le visible, une position d'éclairage dans l'infrarouge, et une position de mise hors service de l'éclairage.

Selon l'invention, le boîtier d'éclairage 41 comprend une diode électroluminescente infrarouge 50 pour l'éclairage en vision nocturne (par exemple l'éclairage d'une piste d'atterrissage) et une ou plusieurs diodes électroluminescentes blanches, ici deux diodes 51, permettant de consulter des cartes de route ou d'éclairer le cockpit.

Il apparaîtra clairement à l'homme de l'art que la présente invention est susceptible de diverses autres variantes et applications. De façon générale, la présente invention permet de réaliser tout type d'éclairage compatible avec les systèmes de vision nocturne à intensification de lumière. Il est bien évident que le domaine des applications de l'invention n'est pas limité aux aéronefs et s'étend de façon générale à toute application terrestre ou maritime, notamment au balisage des pistes et des chemins de roulage, à l'éclairage des parkings, à la réalisation de feux de matérialisation des bordures et des axes de pistes, au balisage d'obstacles,....

## Revendications

1. Utilisation conjointe d'un moyen d'éclairage comprenant au moins une source électroluminescente (21, 33) d'une lumière blanche polychromatique (15) à forte énergie radiante (15-1) dans la bande de longueurs d'ondes du violet/bleu et à faible énergie résiduelle dans la bande de longueurs d'ondes du rouge, et d'un système de vision nocturne à intensification, de lumière (1).

2. Utilisation selon la revendication 1, **caractérisée en ce que** la lumière blanche polychromatique (15) a en outre une forte énergie radiants dans les bandes de longueurs d'ondes du vert/jaune et/ou de l'orange, avec une faible énergie résiduelle dans la bande de longueurs d'ondes du rouge.

3. Utilisation selon la revendication 1 ou 2, **caractérisée en ce que** la source électroluminescente blanche présente un spectre d'émissivité (15) comprenant une dominante (15-1) dans la bande de longueurs d'ondes du violet/bleu et une dominante (15-2) dans la bande de langueurs d'ondes du vert/jaune.

4. Utilisation selon l'une des revendications 1 à 3, **caractérisée en ce que** la source électroluminescente blanche, présente un spectre d'émissivité (15) à dominante bichromatique (15-1, 15-2) avec un pic de chrominance violet/bleu et une large plage de chrominance allant du vert à l'orange.

5. Utilisation selon l'une des revendications 1 à 4, **caractérisée en ce que** la source électroluminescente blanche présente un spectre d'émissivité (15) comprenant une longueur d'onde pic principale (15-1) inférieure à 492 nanomètres, le pic principal étant étroit et de forte intensité, et une longueur d'onde pic secondaire (15-2) comprise entre 492 et 622 nanomètres, le pic secondaire étant large et de moyenne intensité, avec une très faible intensité résiduelle aux longueurs d'ondes supérieures à 622 nanomètres.

6. Utilisation selon l'une des revendications 1 à 5, **caractérisée en ce que** la source électroluminescente de lumière blanche fournit un éclairage direct.

7. Utilisation selon l'une des revendications 1 à 6, **caractérisée en ce que** la source électroluminescente de lumière blanche fournit un éclairage ambiant ou indirect.

8. Utilisation selon l'une des revendications 1 à 7, **caractérisée en ce que** la source électroluminescente de lumière blanche fournit un éclairage sans filtrage dans la bande de longueurs d'ondes du rouge.

9. Utilisation selon l'une des revendications 1 à 8, **caractérisée en ce que** la source électroluminescente de lumière blanche fournit un éclairage guidé dans une planche translucide de tableau de bord.

10. Utilisation selon l'une des revendications 1 à 9, **caractérisée en ce que** la source de lumière est une diode électroluminescente blanche (21, 33).

11. Utilisation selon la revendication 10, pour former un voyant coloré, notamment vert, jaune ou rouge, **caractérisée en ce que** la diode électroluminescente est recouverte par un capuchon coloré non filtré dans la bande de longueurs d'ondes du rouge.

12. Utilisation selon la revendication 10 ou 11, notamment pour former des feux de position, feux d'atterrissage, feux d'anticollision ou feux de formation en vol d'un aéronef, **caractérisée en ce que** la source de lumière blanche polychromatique comporte une pluralité de diodes électroluminescentes blanches (33) agencées sur un circuit imprimé (34).

13. Utilisation selon l'une des revendications 10 à 12, **caractérisée en ce que** la diode électroluminescente blanche (21, 33) ou le circuit imprimé (34) est solidaire d'un culot (32) du type vissant ou à baïonnette,

14. Utilisation l'une des revendications 1 à 9, notamment pour éclairer une cabine ou un tableau de bord, **caractérisée en ce que** la source de lumière comporte une rampe de diodes électroluminescentes blanches.

15. Utilisation selon l'une des revendications 1 à 9, notamment pour éclairer une cabine ou un tableau de bord, **caractérisée en ce que** la source de lumière comporte une plaque électroluminescente blanche.

16. Procédé pour éclairer un tableau de bord d'aéronef ou un élément susceptible d'entrer dans le champ de vision d'un pilote d'aéronef, sans perturber un système de vision nocturne à intensification de lumière (1), **caractérisé en ce qu'**il comprend une étape consistant à utiliser au moins une source électroluminescente (21, 33) d'une lumière blanche polychromatique (15) à forte énergie radiante (15-1) dans la bande de longueurs d'ondes du violet/bleu et à faible énergie résiduelle dans la bande de longueurs d'ondes du rouge.

17. Procédé selon la revendication 16, **caractérisé en ce que** la lumière blanche polychromatique (15) a en outre une forte énergie radiante dans les bandes de longueurs d'ondes du vert/jaune et/ou de l'orange, avec une faible énergie résiduelle dans la bande de longueurs d'ondes du rouge.

18. Procédé selon la revendication 16 ou 17, **caractérisé en ce que** la source électroluminescente blanche présente un spectre d'émissivité (15) comprenant une dominante (15-1) dans la bande de longueurs d'ondes du violet/bleu et une dominante (15-2) dans la bande de longueurs d'ondes du vert/jaune.

19. Procédé selon l'une des revendications 16 à 18, **caractérisé en ce que** la source électroluminescente blanche, présente un spectre d'émissivité (15) à dominante bichromatique (15-1, 15-2) avec un pic de chrominance violet/bleu et une large plage de chrominance allant du vert à l'orange.

20. Procédé selon l'une des revendications 16 à 19, **caractérisé en ce que** la source électroluminescente blanche présente un spectre d'émissivité (15) comprenant une longueur d'onde pic principale (15-1) inférieure à 492 nanomètres, le pic principal étant étroit et de forte intensité, et une longueur d'onde pic secondaire (15-2) comprise entre 492 et 622 nanomètres, le pic secondaire étant large et de moyenne intensité, avec une très faible intensité résiduelle aux longueurs d'ondes supérieures à 622 nanomètres.

21. Procédé selon l'une des revendications 16 à 20, **caractérisé en ce que** la source électroluminescente de lumière blanche fournit un éclairage direct.

22. Procédé selon l'une des revendications 16 à 21, **caractérisé en ce que** la source électroluminescente de lumière blanche fournit un éclairage ambiant ou indirect.

23. Procédé selon l'une des revendications 16 à 22, **caractérisé en ce que** la source électroluminescente de lumière blanche fournit un éclairage sans filtrage dans la bande de longueurs d'ondes du rouge.

24. Procédé selon l'une des revendications 16 à 23, **caractérisé en ce que** la source électroluminescente de lumière blanche fournit un éclairage guidé dans une planche translucide de tableau de bord.

25. Procédé selon l'une des revendications 16 à 24, **caractérisé en ce que** la source de lumière est une diode électroluminescente blanche (21, 33).

26. Procédé selon la revendication 25, pour former un voyant coloré, notamment vert, jaune ou rouge, **caractérisé en ce que** la diode électroluminescente est recouverte par un capuchon coloré non filtré dans la bande de longueurs d'ondes du rouge.

27. Procédé selon la revendication 25 ou 26, notamment pour former des feux de position, feux d'atterrissage, feux d'anticollision ou feux de formation en vol d'un aéronef, **caractérisé en ce que** la source de lumière blanche polychromatique comporte une pluralité de diodes électroluminescentes blanches (33) agencées sur un circuit imprimé (34).

28. Procédé selon l'une des revendications 25 à 27, **caractérisé en ce que** la diode électroluminescente blanche (21, 33) ou le circuit imprimé (34) est solidaire d'un culot (32) du type vissant ou à baïonnette.

29. Procédé l'une des revendications 16 à 24, notamment pour éclairer une cabine ou un tableau de bord, **caractérisé en ce que** la source de lumière comporte une rampe de diodes électroluminescentes blanches.

30. Procédé selon l'une des revendications 16 à 24, notamment pour éclairer une cabine ou un tableau de bord, **caractérisé en ce que** la source de lumière comporte une plaque électroluminescente blanche.

31. Procédé pour adapter un système d'éclairage d'aéronef comprenant des lampes à incandescence (20) à un système de vision nocturne à intensification de lumière, **caractérisé en ce qu'**il comprend l'opération consistant à remplacer au moins une partie des lampes à incandescence par des diodes électroluminescentes (21, 33) émettant une lumière blanche polychromatique (15) à forte énergie radiante dans la bande de longueurs d'ondes du violet/bleu et à faible énergie résiduelle dans la bande de longueurs d'ondes du rouge.

32. Procédé selon la revendication 31, **caractérisé en ce que** la lumière blanche polychromatique (15) a en outre une forte énergie radiante dans les bandes de longueurs d'ondes du vert/jaune et/ou de l'orange, avec une faible énergie résiduelle dans la bande de longueurs d'ondes du rouge.

33. Procédé selon les revendications 31 ou 32, **caractérisé en ce que** l'on ne filtre pas dans la bande de longueurs d'ondes du rouge la lumière émise par les diodes électroluminescentes blanches.

34. Procédé pour adapter un système de feux de position, d'atterrissage, d'anticollision ou de formation en vol d'aéronef comprenant des lampes à incandescence à un système de vision nocturne à intensification de lumière, caraccérisé en ce qu'il comprend l'opération consistant à remplacer chaque lampe à incandescence par une pluralité de diodes électroluminescentes (33) émettant une lumière blanche polychromatique (15) à forte énergie radiante dans la bande de longueurs d'ondes du violet/bleu et à faible énergie résiduelle dans la bande de longueurs d'ondes du rouge.

35. Procédé selon la revendication 34, **caractérisé en ce que** la lumière polychromatique (15) a en outre une forte énergie radiante dans les bandes de longueurs d'ondes du vert/jaune et/ou de l'orange, avec une faible énergie résiduelle dans la bande de longueurs d'ondes du rouge.

36. Procédé selon la revendication 34 ou 35, **caractérisé en ce que** l'on ne filtre pas dans la bande de longueurs d'ondes du rouge la lumière émise par les diodes électroluminescentes blanches.

37. Moyen d'éclairage (30) pour feux d'aéronef, compatible avec un système de vision nocturne à intensification de lumière (1), notamment pour feux de position, feux d'atterrissage, feux d'anticollision ou feux de formation en vol, **caractérisé en ce qu'**il comprend une pluralité de diodes électroluminescentes blanches (33) agencées sur un circuit imprimé (34), émettant une lumière blanche polychromatique (15) à forte énergie radiante (15-1) dans la bande de longueurs d'ondes du violet/bleu et à faible énergie résiduelle dans la bande de longueurs d'ondes du rouge.

38. Moyen d'éclairage selon la revendication 37, **caractérisé en ce que** la diode électroluminescente blanche (21, 33) ou le circuit imprimé (34) est solidaire d'un culot (32) du type vissant ou à baïonnette.

39. Moyen d'éclairage selon l'une des revendications 37 et 38, **caractérisé en ce que** la lumière blanche polychromatique (15) a en outre une forte énergie radiante dans les bandes de longueurs d'ondes du vert/jaune et/ou de l'orange, avec une faible énergie résiduelle dans la bande de longueurs d'ondes du rouge.

40. Moyen d'éclairage selon l'une des revendications 37 et 38, **caractérisé en ce que** la lumière blanche polychromatique (15) présente un spectre d'émissivité (15) comprenant une dominante (15-1) dans la bande de longueurs d'ondes du violet/bleu et une dominante (15-2) dans la bande de longueurs d'ondes du vert/jaune.

41. Moyen d'éclairage (30) de cabine ou tableau de bord d'aéronef, compatible avec un système de vision nocturne à intensification de lumière (1), **caractérisé en ce qu'**il comprend une rampe de diodes électroluminescentes blanches émettant une lumière blanche polychromatique (15) à forte énergie radiante (15-1) dans la bande de longueurs d'ondes du violet/bleu et à faible énergie résiduelle dans la bande de longueurs d'ondes du rouge.

42. Moyen d'éclairage selon la revendication 41, **caractérisé en ce que** la lumière blanche polychromatique (15) a en outre une forte énergie radiante dans les bandes de longueurs d'ondes du vert/jaune et/ou de l'orange, avec une faible énergie résiduelle dans la bande de longueurs d'ondes du rouge.

43. Moyen d'éclairage selon l'une des revendications 41 et 42, **caractérisé en ce que** la lumière blanche polychromatique (15) présente un spectre d'émissivité (15) comprenant une dominante (15-1) dans la bande de longueurs d'ondes du violet/bleu et une dominante (15-2) dans la bande de longueurs d'ondes du vert/jaune.

44. Système d'éclairage (40) comprenant des moyens d'éclairage dans le visible, des moyens d'éclairage dans l'infrarouge et des moyens interrupteurs permettant de choisir entre une position d'éclairage dans le visible et une position d'éclairage dans l'infrarouge, **caractérisé en ce que** les moyens d'éclairage dans le visible comprennent au moins une diode électroluminescente émettant une lumière blanche polychromatique (15) à forte énergie radiante dans la bande de longueurs d'ondes du violet/bleu et à faible énergie résiduelle dans la bande de longueurs d'ondes du rouge.

45. Système d'éclairage selon la revendication 44, **caractérisé en ce que** la lumière blanche polychromatique (15) a en outre une forte énergie radiante dans les bandes de longueurs d'ondes du vert/jaune et/ou, de l'orange, avec une faible énergie résiduelle dans la bande de longueurs d'ondes du rouge.

## Patentansprüche

1. Gemeinsame Verwendung eines Beleuchtungsmittels, umfassend mindestens eine Lumineszenzquelle (21, 33) eines weißen polychromatischen Lichts (15) mit starker Strahlungsenergie (15-1) in dem Wellenlängenband von Violett/Blau und mit geringer Restenergie in dem Wellenlängenband von Rot, und eines Nachtsichtsystems mit Lichtverstärkung (1).

2. Verwendung nach Anspruch 1, **dadurch gekennzeichnet, daß** das weiße polychromatische Licht (15) ferner eine starke Strahlungsenergie in den Wellenlängenbändern von Grün/Gelb und/oder Orange hat, mit einer geringen Restenergie in dem Wellenlängenband von Rot.

3. Verwendung nach Anspruch 1 oder 2, **dadurch gekennzeichnet, daß** die weiße Lumineszenzquelle ein Emissivitätsspektrum (15) aufweist, das eine Dominante (15-1) in dem Wellenlängenband von Violett/Blau und eine Dominante (15-2) in dem Wellenlängenband von Grün/Gelb aufweist.

4. Verwendung nach einem der Ansprüche 1 bis 3, **dadurch gekennzeichnet, daß** die weiße Lumineszenzquelle ein Emissivitätsspektrum (15) mit einer bichromatischen Dominante (15-1, 15-2) mit einem Chrominanzpeak von Violett/Blau und einem breiten Chrominanzbereich von Grün bis Orange aufweist.

5. Verwendung nach einem der Ansprüche 1 bis 4, **dadurch gekennzeichnet, daß** die weiße Lumineszenzquelle ein Emissivitätsspektrum (15) aufweist, umfassend eine Hauptpeakwellenlänge (15-1) von weniger als 492 Nanometern, wobei das Hauptpeak schmal und von starker Intensität ist, und eine Nebenpeakwellenlänge (15-2) zwischen 492 und 622 Nanometern, wobei das Nebenpeak breit und von durchschnittlicher Intensität ist, mit einer sehr geringen Restintensität bei den Wellenlängen von mehr als 622 Nanometern.

6. Verwendung nach einem der Ansprüche 1 bis 5, **dadurch gekennzeichnet, daß** die Lumineszenzquelle des weißen Lichts eine direkte Beleuchtung liefert.

7. Verwendung nach einem der Ansprüche 1 bis 6, **dadurch gekennzeichnet, daß** die Lumineszenzquelle des weißen Lichts eine Raumbeleuchtung oder indirekte Beleuchtung liefert.

8. Verwendung nach einem der Ansprüche 1 bis 7, **dadurch gekennzeichnet, daß** die Lumineszenzquelle des weißen Lichts eine Beleuchtung ohne Filterung in dem Wellenlängenband von Rot liefert.

9. Verwendung nach einem der Ansprüche 1 bis 8, **dadurch gekennzeichnet, daß** die Lumineszenzquelle des weißen Lichts eine geführte Beleuchtung in einer durchscheinenden Platte einer Instrumententafel liefert.

10. Verwendung nach einem der Ansprüche 1 bis 9, **dadurch gekennzeichnet, daß** die Lichtquelle eine weiße LED-Diode (21, 33) ist.

11. Verwendung nach Anspruch 10, um eine Farbscheibe, insbesondere der Farbe grün, gelb oder rot, zu bilden, **dadurch gekennzeichnet, daß** die LED-Diode mit einer Farbkappe, die in dem Wellenlängenband von Rot nicht gefiltert ist, bedeckt ist.

12. Verwendung nach Anspruch 10 oder 11, insbesondere um Stellungslichter, Landelichter oder Flugformationslichter eines Luftfahrzeugs zu bilden, **dadurch gekennzeichnet, daß** die Quelle des weißen polychromatischen Lichts eine Vielzahl von weißen LED-Dioden (33) umfasst, die auf einer gedruckten Schaltung (34) angeordnet sind.

13. Verwendung nach einem der Ansprüche 10 bis 12, **dadurch gekennzeichnet, daß** die weiße LED-Diode (21, 33) oder gedruckte Schaltung (34) mit einem Schraubsockel oder Bajonettsockel (32) fest verbunden ist.

14. Verwendung nach einem der Ansprüche 1 bis 9, insbesondere zur Beleuchtung einer Kabine oder Instrumententafel, **dadurch gekennzeichnet, daß** die Lichtquelle eine Rampe weißer LED-Dioden umfasst.

15. Verwendung nach einem der Ansprüche 1 bis 9, insbesondere um eine Kabine oder Instrumententafel zu beleuchten, **dadurch gekennzeichnet, daß** die Lichtquelle eine weiße LED-Platte umfasst.

16. Verfahren zur Beleuchtung einer Instrumententafel eines Luftfahrzeugs oder eines Elements, das in den Sichtbereich eines Piloten eines Luftfahrzeuges gelangen kann, ohne ein Nachtsichtgerät mit Lichtverstärkung (1) zu stören, **dadurch gekennzeichnet, daß** es einen Schritt umfasst, der darin besteht, mindestens eine LED-Quelle (21, 33) eines weißen polychromatischen Lichts (15) mit starker Strahlungsenergie (15-1) in dem Wellenlängenband von Violett/Blau und mit geringer Restenergie in dem Wellenlängenband von Orange zu verwenden.

17. Verfahren nach Anspruch 16, **dadurch gekennzeichnet, daß** das weiße polychromatische Licht (15) ferner eine starke Strahlungsenergie in den Wellenlängenbändern von Grün/Gelb und/oder Orange aufweist, mit einer geringen Restenergie in dem Wellenlängenband von Rot.

18. Verfahren nach Anspruch 16 oder 17, **dadurch gekennzeichnet, daß** die weiße Lumineszenzquelle ein Emissivitätsspektrum (15) aufweist, das eine Dominante (15-1) in dem Wellenlängenband von Violett/Blau und eine Dominante (15-2) in dem Wellenlängenband von Grün/Gelb aufweist.

19. Verfahren nach einem der Ansprüche 16 bis 18, **dadurch gekennzeichnet, daß** die weiße Lumineszenzquelle ein Emissivitätsspektrum (15) mit bichromatischer Dominante (15-1, 15-2) mit einem Chrominanzpeak in Violett/Blau und einem breiten Chrominanzbereich von Grün bis Orange aufweist.

20. Verfahren nach einem der Ansprüche 16 bis 19, **dadurch gekennzeichnet, daß** die weiße Lumineszenzquelle ein Emissivitätsspektrum (15) aufweist, umfassend eine Hauptpeakwellenlänge (15-1) von weniger als 492 Nanometern, wobei das Hauptpeak schmal und von starker Intensität ist, und eine Nebenpeakwellenlänge (15-2) zwischen 492 und 622 Nanometern, wobei das Nebenpeak breit und von durchschnittlicher Intensität ist, mit einer sehr geringen Restintensität an den Wellenlängen von mehr als 622 Nanometern.

21. Verfahren nach einem der Ansprüche 16 bis 20, **dadurch gekennzeichnet, daß** die Lumineszenzquelle des weißen Lichts eine direkte Beleuchtung liefert.

22. Verfahren nach einem der Ansprüche 16 bis 21, **dadurch gekennzeichnet, daß** die Lumineszenzquelle des weißen Lichts eine Raumbeleuchtung oder indirekte Beleuchtung liefert.

23. Verfahren nach einem der Ansprüche 16 bis 22, **dadurch gekennzeichnet, daß** die Lumineszenzquelle des weißen Lichts eine Beleuchtung ohne Filterung in dem Wellenlängenband von Rot liefert.

24. Verfahren nach einem der Ansprüche 16 bis 23, **dadurch gekennzeichnet, daß** die Lumineszenzquelle des weißen Lichts eine geführte Beleuchtung in einer durchscheinenden Platte einer Instrumententafel liefert.

25. Verfahren nach einem der Ansprüche 16 bis 24, **dadurch gekennzeichnet, daß** die Lichtquelle eine weiße LED-Diode (21, 23) ist.

26. Verfahren nach Anspruch 25, um eine Farbscheibe, insbesondere der Farbe grün, gelb oder rot, zu bilden,
**dadurch gekennzeichnet, daß** die LED-Diode mit einer Farbkappe, die in dem Wellenlängenband von Rot nicht gefiltert ist, bedeckt ist.

27. Verfahren nach Anspruch 25 oder 26, insbesondere um Stellungslichter, Landelichter oder Flugformationslichter eines Luftfahrzeugs zu bilden, **dadurch gekennzeichnet, daß** die Quelle des weißen polychromatischen Lichts eine Vielzahl von weißen LED-Dioden (33) umfasst, die auf einer gedruckten Schaltung (34) angeordnet sind.

28. Verfahren nach einem der Ansprüche 25 bis 27, **dadurch gekennzeichnet, daß** die weiße LED-Diode (21, 33) oder gedruckte Schaltung (34) mit einem Schraubsockel oder Bajonettsockel (32) fest verbunden ist.

29. Verfahren nach einem der Ansprüche 16 bis 24, insbesondere zur Beleuchtung einer Kabine oder Instrumententafel, **dadurch gekennzeichnet, daß** die Lichtquelle eine Rampe weißer LED-Dioden umfasst.

30. Verfahren nach einem der Ansprüche 16 bis 24, insbesondere um eine Kabine oder Instrumententafel zu beleuchten, **dadurch gekennzeichnet, daß** die Lichtquelle eine weiße LED-Platte umfasst.

31. Verfahren, um ein Beleuchtungssystem für ein Luftfahrzeug anzupassen, umfassend Glühlampen (20) mit einem Nachtsichtgerät mit Lichtverstärkung, **dadurch gekennzeichnet, daß** es den Schritt umfasst, der darin besteht, mindestens einen Teil der Glühlampen durch LED-Dioden (21, 33) zu ersetzen, die ein weißes polychromatisches Licht (15) entsenden, mit hoher Strahlungsenergie in dem Wellenlängenband von Violett/Blau und mit geringer Restenergie in dem Wellenlängenband von Rot.

32. Verfahren nach Anspruch 31, **dadurch gekennzeichnet, daß** das weiße polychromatische Licht (15) ferner eine starke Strahlungsenergie in den Wellenlängenbändern von Grün/Gelb und/oder Orange aufweist, mit einer geringen Restenergie in dem Wellenlängenband von Rot.

33. Verfahren nach den Ansprüchen 31 oder 32, **dadurch gekennzeichnet, daß** in dem Wellenlängenband von Rot das von den weißen LED-Dioden entsandte Licht nicht gefiltert wird.

34. Verfahren, um ein System von Stellungslichtern, Landelichtern, Antikollisionslichtern oder Flugformationslichtern eines Luftfahrzeugs anzupassen, umfassend Glühlampen mit einem Nachtsichtgerät mit Lichtverstärkung, **dadurch gekennzeichnet, daß** es den Schritt umfasst, der darin besteht, jede Glühlampe durch eine Vielzahl von LED-Dioden (33) zu ersetzen, die ein weißes polychromatisches Licht (15) mit starker Strahlungsenergie in dem Wellenlängenband von Violett/Blau und mit geringer Restenergie in dem Wellenlängenband von Rot entsenden.

35. Verfahren nach Anspruch 34, **dadurch gekennzeichnet, daß** das polychromatische Licht (15) ferner eine starke Strahlungsenergie in den Wellenlängenbändern von Grün/Gelb und/oder Orange besitzt, mit einer geringen Restenergie in dem Wellenlängenband von Rot.

36. Verfahren nach Anspruch 34 oder 35, **dadurch gekennzeichnet, daß** in dem Wellenlängenband des Rot das von den weißen LED-Dioden entsandte Licht nicht gefiltert wird.

37. Beleuchtungsmittel (30) für Lichter eines Luftfahrzeugs, das mit einem Nachtsichtgerät mit Lichtverstärkung (1) vereinbar ist, insbesondere für Stellungslichter, Landelichter, Antikollisionslichter oder Flugformationslichter, **dadurch gekennzeichnet, daß** es eine Vielzahl von weißen LED-Dioden (33) umfasst, die auf einer gedruckten Schaltung (34) angeordnet sind, die ein weißes polychromatisches Licht (15) mit starker Strahlungsenergie (15-1) in dem Wellenlängenband von Violett/Blau und mit geringer Restenergie in dem Wellenlängenband von Rot entsendet.

38. Beleuchtungsmittel nach Anspruch 37, **dadurch gekennzeichnet, daß** die weiße LED-Diode (21, 33) oder die gedruckte Schaltung (34) mit einem Schraub- oder Bajonettsockel (32) fest verbunden ist.

39. Beleuchtungsmittel nach einem der Ansprüche 37 und 38, **dadurch gekennzeichnet, daß** das weiße polychromatische Licht (15) ferner eine starke Strahlungsenergie in den Wellenlängenbändern von Grün/Gelb und/oder Orange besitzt, mit einer geringen Restenergie in dem Wellenlängenband von Rot.

40. Beleuchtungsmittel nach einem der Ansprüche 37 und 38, **dadurch gekennzeichnet, daß** das weiße polychromatische Licht (15) ein Emissivitätsspektrum (15) aufweist, das eine Dominante (15-1) in dem Wellenlängenband von Violett/Blau und eine Dominante (15-2) in dem Wellenlängenband von Grün/Gelb aufweist.

41. Beleuchtungsmittel (30) für eine Kabine oder Instrumententafel eines Luftfahrzeugs, das mit einem Nachtsichtgerät mit Lichtverstärkung (1) vereinbar ist, **dadurch gekennzeichnet, daß** es eine Rampe von weißen LED-Dioden umfasst, die ein weißes polychromatisches Licht (15) mit starker Strahlungsenergie (15-1) in dem Wellenlängenband von Violett/Blau und mit geringer Restenergie in dem Wellenlängenband von Rot entsenden.

42. Beleuchtungsmittel nach Anspruch 41, **dadurch gekennzeichnet, daß** das weiße polychromatische Licht (15) ferner eine starke Strahlungsenergie in den Wellenlängenbändern von Grün/Gelb und/oder von Orange aufweist, mit einer geringen Restenergie in dem Wellenlängenband von Rot.

43. Beleuchtungsmittel nach einem der Ansprüche 41 und 42, **dadurch gekennzeichnet, daß** das weiße polychromatische Licht (15) ein Emissivitätsspektrum (15) aufweist, das eine Dominante (15-1) in dem Wellenlängenband von Violett/Blau und eine Dominante (15-2) in dem Wellenlängenband von Grün/Gelb aufweist.

44. Beleuchtungssystem (40), umfassend Beleuchtungsmittel im sichtbaren Bereich, Beleuchtungsmittel im Infrarotbereich und Schaltermittel, die es ermöglichen, zwischen einer Beleuchtungsposition im sichtbaren Bereich und einer Beleuchtungsposition im Infrarotbereich zu wählen, **dadurch gekennzeichnet, daß** die Beleuchtungsmittel im sichtbaren Bereich mindestens eine LED-Diode umfassen, die ein weißes polychromatisches Licht (15) mit starker Strahlungsenergie im Wellenlängenbereich von Violett/Blau und mit geringer Restenergie im Wellenlängenbereich von Rot entsendet.

45. Beleuchtungssystem nach Anspruch 44, **dadurch gekennzeichnet, daß** das weiße polychromatische Licht (15) ferner eine starke Strahlungsenergie in den Wellenlängenbändern von Grün/Gelb und/oder Orange besitzen, mit einer geringen Restenergie in dem Wellenlängenband von Rot.

## Claims

1. Combined use of a lighting means comprising at least one light-emitting source (21, 33) of a polychromatic white light (15) with strong radiant energy (15-1) in the violet/blue wavelengths band and with a low level of residual energy in the red wavelengths band, and a light-intensification night vision system (1).

2. Use according to claim 1 **characterised in that** the polychromatic white light (15) also has strong radiant energy in the green/yellow and/or orange wavelengths bands, with a low level of residual energy in the red wavelengths band.

3. Use according to claim 1 or claim 2 **characterised in that** the white light-emitting source has an emissivity spectrum (15) comprising a dominant (15-1) in the violet/blue wavelengths band and a dominant (15-2) in the green/yellow wavelengths band.

4. Use according to one of claims 1 to 3 **characterised in that** the white light-emitting source has an emissivity spectrum (15) with a bichromatic dominant (15-1, 15-2) with a violet/blue chrominance peak and a wide chrominance range going from green to orange.

5. Use according to one of claims 1 to 4 **characterised in that** the white light-emitting source has an emissivity spectrum (15) comprising a main peak wavelength (15-1) of lower than 492 nanometers, the main peak being narrow and of strong intensity, and a secondary peak wavelength (15-2) of between 492 and 622 nanometers, the secondary peak being wide and of medium intensity, with a very low level of residual intensity at the wavelengths of higher than 622 nanometers.

6. Use according to one of claims 1 to 5 **characterised in that** the light-emitting source emitting white light provides direct lighting.

7. Use according to one of claims 1 to 6 **characterised in that** the light-emitting source emitting white light provides ambient or indirect lighting.

8. Use according to one of claims 1 to 6 **characterised in that** the light-emitting source emitting white light provides lighting without filtering in the red wavelengths band.

9. Use according to one of claims 1 to 8 **characterised in that** the light-emitting source emitting white light provides lighting which is guided in a translucent instrument panel board.

10. Use according to one of claims 1 to 9 **characterised in that** the light source is a white light-emitting diode (21, 33).

11. Use according to claim 10 for forming a coloured, in particular green, yellow or red indicator light, **characterised in that** the light-emitting diode is covered by a coloured cap which is non-filtered in the red wavelengths band.

12. Use according to claim 10 or claim 11, in particular for forming navigation lights, landing lights, anti-collision lights or flight formation lights of an aircraft, **characterised in that** the polychromatic white light source comprises a plurality of white light-emitting diodes (33) arranged on a printed circuit (34).

13. Use according to one of claims 10 to 12 **characterised in that** the white light-emitting diode (21, 33) or the printed circuit (34) is fixed with respect to a base (32) of screw-in or bayonet type.

14. Use according to one of claims 1 to 9 in particular for lighting a cabin or an instrument panel **characterised in that** the light source comprises an array of white light-emitting diodes.

15. Use according to one of claims 1 to 9 in particular for lighting a cabin or an instrument panel **characterised in that** the light source comprises a white light-emitting panel.

16. A process for lighting an aircraft instrument panel or an element likely to pass into the field of vision of an aircraft pilot without interfering with a light-intensification night vision system (1), **characterised in that** it comprises a step involving using at least one light-emitting source (21, 33) of a polychromatic white light (15) with strong radiant energy (15-1) in the violet/blue wavelengths band and with a low level of residual energy in the red wavelengths band.

17. A process according to claim 16 **characterised in that** the polychromatic white light (15) also has strong radiant energy in the green/yellow and/or orange wavelengths bands, with a low level of residual energy in the red wavelengths band.

18. A process according to claim 16 or claim 17 **characterised in that** the white light-emitting source has an emissivity spectrum (15) comprising a dominant (15-1) in the violet/blue wavelengths band and a dominant (15-2) in the green/yellow wavelengths band.

19. A process according to one of claims 16 to 18 **characterised in that** the white light-emitting source has an emissivity spectrum (15) with a bichromatic dominant (15-1, 15-2) with a violet/blue chrominance peak and a wide chrominance range going from green to orange.

20. A process according to one of claims 16 to 19 **characterised in that** the white light-emitting source has an emissivity spectrum (15) comprising a main peak wavelength (15-1) of lower than 492 nanometers, the main peak being narrow and of strong intensity, and a secondary peak wavelength (15-2) of between 492 and 622 nanometers, the secondary peak being wide and of medium intensity, with a very low level of residual intensity at the wavelengths of higher than 622 nanometers.

21. A process according to one of claims 16 to 20 **characterised in that** the light-emitting source emitting white light provides direct lighting.

22. A process according to one of claims 16 to 21 **characterised in that** the light-emitting source emitting white light provides ambient or indirect lighting.

23. A process according to one of claims 16 to 22 **characterised in that** the light-emitting source emitting white light provides lighting without filtering in the red wavelengths band.

24. A process according to one of claims 16 to 23 **characterised in that** the light-emitting source emitting white light provides lighting which is guided in a translucent instrument panel board.

25. A process according to one of claims 16 to 24 **characterised in that** the light source is a white light-emitting diode (21, 33).

26. A process according to claim 25 for forming a coloured, in particular green, yellow or red indicator light, **characterised in that** the light-emitting diode is covered by a coloured cap which is non-filtered in the red wavelengths band.

27. A process according to claim 25 or claim 26, in particular for forming navigation lights, landing lights, anti-collision lights or flight formation lights of an aircraft, **characterised in that** the polychromatic white light source comprises a plurality of white light-emitting diodes (33) arranged on a printed circuit (34).

28. A process according to one of claims 25 to 27 **characterised in that** the white light-emitting diode (21, 33) or the printed circuit (34) is fixed with respect to a base (32) of screw-in or bayonet type.

29. A process according to one of claims 16 to 24 in particular for lighting a cabin or an instrument panel **characterised in that** the light source comprises an array of white light-emitting diodes.

30. A process according to one of claims 16 to 24 in particular for lighting a cabin or an instrument panel **characterised in that** the light source comprises a white light-emitting panel.

31. A process for adapting an aircraft lighting system comprising incandescent lamps (20) to a light-intensification night vision system, **characterised in that** it comprises the operation of replacing at least a part of the incandescent lamps by light-emitting diodes (21, 33) emitting polychromatic white light (15) with strong radiant energy in the violet/blue wavelengths band and with a low level of residual energy in the red wavelengths band.

32. A process according to claim 31 **characterised in that** the polychromatic white light (15) also has strong radiant energy in the green/yellow and/or orange wavelengths band, with a low level of residual energy in the red wavelengths band.

33. A process according to claim 31 or claim 32 **characterised in that** the light emitted by the white light-emitting diodes is not filtered in the red wavelengths band.

34. A process for adapting a system of aircraft navigation, landing, anti-collision or flight formation lights comprising incandescent lamps to a light-intensification night vision system, **characterised in that** it comprises the operation of replacing each incandescent lamp by a plurality of light-emitting diodes (33) emitting polychromatic white light (15) with strong radiant energy in the violet/blue wavelengths band and with a low level of residual energy in the red wavelengths band.

35. A process according to claim 34 **characterised in that** the polychromatic light (15) also has strong radiant energy in the green/yellow and/or orange wavelengths band, with a low level of residual energy in the red wavelengths band.

36. A process according to claim 34 or claim 35 **characterised in that** the light emitted by the white light-emitting diodes is not filtered in the red wavelengths band.

37. A lighting means (30) for aircraft lights which is compatible with a light-intensification night vision system (1), in particular for navigation lights, landing lights, anti-collision lights or flight formation lights, **characterised in that** it comprises a plurality of white light-emitting diodes (33) arranged on a printed circuit (34), emitting a polychromatic white light (15) with strong radiant energy (15-1) in the violet/blue wavelengths band and with a low level of residual energy in the red wavelengths band.

38. A lighting means according to claim 37 **characterised in that** the white light-emitting diode (21, 33) or the printed circuit (34) is fixed with respect to a base (32) of screw-in or bayonet type.

39. A lighting means according to one of claims 37 and 38 **characterised in that** the polychromatic white light (15) also has strong radiant energy in the green/yellow and/or orange wavelengths bands, with a low level of residual energy in the red wavelengths band.

40. A lighting means (30) according to one of claims 37 and 38 **characterised in that** the polychromatic white light (15) has an emissivity spectrum (15) comprising a dominant (15-1) in the violet/blue wavelengths band and a dominant (15-2) in the green/yellow wavelengths band.

41. A lighting means (30) for a cabin or instrument panel of an aircraft, which is compatible with a light-intensification night vision system (1), **characterised in that** it comprises an array of white light-emitting diodes emitting a polychromatic white light (15) with strong radiant energy (15-1) in the violet/blue wavelengths band and with a low level of residual energy in the red wavelengths band.

42. A lighting means according to claim 41 **characterised in that** the polychromatic white light (15) also has strong radiant energy in the green/yellow and/or orange wavelengths bands, with a low level of residual energy in the red wavelengths band.

43. A lighting means according to one of claims 41 and 42 **characterised in that** the polychromatic white light (15) has an emissivity spectrum (15) comprising a dominant (15-1) in the violet/blue wavelengths band and a dominant (15-2) in the green/yellow wavelengths band.

44. A lighting system (40) comprising means for lighting in the visible range, means for lighting in the infra-red and switch means permitting a choice between a lighting position in the visible range and a lighting position in the infra-red, **characterised in that** the lighting means in the visible range comprise at least one light-emitting diode emitting a polychromatic white light (15) with strong radiant energy (15-1) in the violet/blue wavelengths band and with a low level of residual energy in the red wavelengths band.

45. A lighting system according to claim 44 **characterised in that** the polychromatic white light (15) also has strong radiant energy in the green/yellow and/or orange wavelengths bands, with a low level of residual energy in the red wavelengths band.
